# EUROPEAN PATENT APPLICATION

(11) **EP 1 271 912 A1**
(43) Date of publication of application: **02.01.2003**
(21) Application number: 01305345.9
(22) Date of filing: 20.06.2001
(51) Int. Cl.: H04M 19/04, H04Q 7/32

(54) **Distinctive ringing tones transmitted from a network-based store**

(71) Applicant: BRITISH TELECOMMUNICATIONS public limited company, London EC1A 7AJ (GB)
(72) Inventor: Pattinson, Mark Lawrence, Leiston, Suffolk IP16 4AY (GB)
(74) Representative: Lidbetter, Timothy Guy Edwin

(57) **Abstract**

A system for transmitting ringing tones to a mobile telephone at the time of a call attempt, for association with a specified caller, uses a lookup application 10 in the user handset 1. This application responds to a message alert code 31 associated with the call attempt and responds by transmitting a query 33 to a server 20, requesting a match between the code 30 and an audio file/tone sequence stored in the server 20.

The server 20 receives the query 33, and matches the code 30 with an audio file/tone sequence 34 stored in the server 20. It then transmits the tone sequence 34 to the handset 1 in a format from which the handset 1 can translate it (step 35) to the required audio alert tone sequence 36. The user is therefore alerted to the incoming call attempt, and can then answer it to allow the call 37 to be connected.

## Description

This invention relates to audio signalling, and in particular to the generation of audio alerts for incoming calls to telephones.

In conventional fixed landline telephones the bell, buzzer or other call alert device is operated by an electric current, typically of 50V, generated at the telephone exchange and transmitted over the telephone to the customer premises device, where it powers the call alert device. However, portable telephones cannot be made to ring in this way as they are only connected to the telephone network by a wireless (radio, infra red, ultrasonic) connection. In such systems, when an incoming call attempt is made a call alert signal is transmitted from the fixed base station to the portable device, which then generates audible tones to alert the user to an incoming call using its own internal power supply (usually a battery).

The generation of the call alert is therefore decoupled from the ringing current itself. The manufacturers of portable telephones have used this opportunity to allow a great variety of call alerts using sequences of tones, or using other modes (such as visual or tactile alerts) to be made available. As well as the simple novelty value, this facility allows a user to identify whether his is the one, of several portable telephones in the vicinity, that is actually ringing. It also allows different tone sequences to be selected for different circumstances, e.g. voice or text messages, different callers (using "calling line identity"), or discreet/silent/visual or vibration-only alerts when an audible alert would not be appropriate.

Initially the tones were programmed into the handset, or could be programmed manually by the user, but more recently a considerable market has developed in arrangements for different tone sequences (popular tunes, etc) to be downloaded from websites onto internet-capable computers from where they can be loaded into the portable device by hard-wiring the computer and device together. Some existing mobile devices also have the capability to receive data messages (SMS or TCP) and perform simple functions based on the parameters specified in the message, and this facility has been exploited to allow the direct downloading of call alert tone sequences to cellular telephones.

In addition, many telephones now have the facility to assign different alerts to calls from different callers (for example, to distinguish a personal call from that of a work colleague) - to allow for this the device contains a small software application that interrogates the CLI (calling line identity).

The present invention relates to a new application of these capabilities.

A calling party may wish to retain control of the use of a given ringing tone sequence, so that its use can be limited to authorised users and uses, and so that the caller can select which of a variety of alert tones is to be used for the call to be made. It is not practical to transmit the ring tone as part of the call signal itself as the call signal is a single, short pulse that 'tells' the mobile device there's an incoming call and prompts the mobile device to play the stored ring tones. Until connection is made, cellular telephone systems operate with insufficient bandwidth for the ring tones to be included as part of the call attempt. This problem is multiplied when several mobiles are being used in the same vicinity.

According to the invention, there is provided a telecommunications apparatus having programmable call alert means, means for interrogating an incoming call for a code associated with the caller's audio alert, means for retrieving from a network-based store a series of tones associated with the said code, and means for playing the retrieved tones.

According to another aspect there is provided apparatus for generating calls to telephones, comprising means for storing one or more predetermined series of tones, means for generating a call attempt, the call attempt signal incorporating a code asociated with one of the predetermined series of tones, means for receiving a tone retrieval request from the called telephone, and means for transmitting the associated series of tones to the called telephone.

By having the mobile unit retrieve the call alert tone sequence from a network-based store rather than a built-in one, a better quality rendition may be achieved. In particular it may allow for greater quality control, by the supplier of the call alert tones, than is possible if the tones are stored internally to the device. It also allows the supplier to retain control of the use of the tone sequences, so that their use can be limited to authorised users, or so that the supplier can select which of a variety of alert tones is to be used for the call to be made.

The invention may be used to allow a supplier with an audio "brand" or trade mark to make its own calls distinctive by making their portable handsets play the audio brand as a call alert. Mobile devices have a standard range of tones around which a company's audio brand can be designed. This allows effective delivery of the audio-brand across the network to a standard quality. This invention gives the opportunity for companies to deliver their own audio brands across the network as part of a targeted message. The advantage to users is that important information from a company that they may be expecting can be distinguished from other calls, and acted on accordingly, without the need for the user to pre-programme a specific call alert tone/CLl association into his telephone.

With the arrival of high-bandwidth data links, network-based content is preferable to that which may be stored in the device itself, since memory needed to play bandwidth-hungry content will be at a premium compared with the bandwidth available over the communications link.

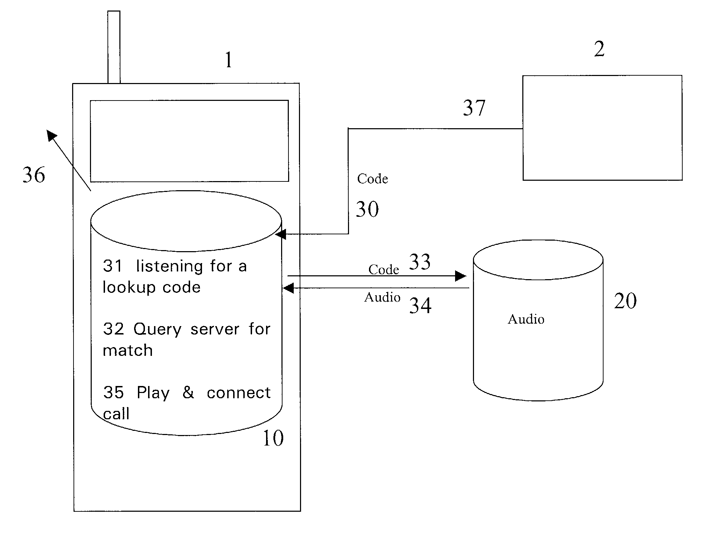

An embodiment of the invention will now be described, by way of example only and with reference to the Figure, which represents a portable telephone and a co-operting network-based server operating according to the invention.

In the Figure a portable telephone is depicted generally at 1, and a calling party's telephone equipment at 2. A server 20 including a store of audio tone sequences is associated with the calling party's equipment 2.

The portable telephone 1 has an "audio lookup application" 10 installed. This may be pre-configured on manufacture, or downloaded and installed by the user subsequently.

The process by which this embodiment operates will now be described with reference to the drawing.

When a call attempt 37 is to be made by a party which is to be associated with a stored tone sequence 32 a message alert code 30 is first transmitted from the calling party's equipment 2. Code relating to a specific audio file or tone sequence can be transmitted in one of three ways:
within the telemetry channel paging sequence (used for identifying the destination device and location)
as part of the message alert itself (SMS, TCP)
as part of the caller line identity stored within the network.

The "audio lookup application" 10 in the user handset 1 is listening out for such message alert codes (31) and on receiving one responds by transmitting (step 32) a query 33 to the server 20, requesting a match between the code 30 and an audio file/tone sequence stored in the server 20.

The server 20 receives the query 33, and matches the code 30 with an audio file/tone sequence 34 stored in the server 20. It then transmits the tone sequence 34 to the handset 1 in a format from which the handset 1 can translate it (step 35) to the required audio alert tone sequence 36. The user is therefore alerted to the incoming call attempt, and will then answer it in the usual way to allow the call 37 to be connected.

## Claims

1. A telecommunications apparatus having programmable call alert means, means for interrogating an incoming call for a code associated with the caller's audio alert, means for retrieving from a network-based store a series of tones associated with the said code, and means for playing the retrieved tones.

2. Apparatus according to claim 1, comprising means for detecting audio alert codes within a telemetry channel paging sequence.

3. Apparatus according to claim 1, comprising means for detecting audio alert codes as part of a message alert itself

4. Apparatus according to claim 1, comprising means for detecting audio alert codes as part of a caller line identity stored within the network.

5. Apparatus for generating calls to telephones, comprising means for storing one or more predetermined series of tones, means for generating a call attempt, the call attempt signal incorporating a code asociated with one of the predetermined series of tones, means for receiving a tone retrieval request from the called telephone, and means for transmitting the associated series of tones to the called telephone.

6. A method of generating call alerts for telephone apparatus, comprising the steps of generating a call attempt signal incorporating a code asociated with a predetermined series of tones, interrogating an incoming call for the said code, retrieving from a network-based store a series of tones associated with the said code, and playing the retrieved tones.

7. A method according to claim 6, wherein the audio alert codes are contained within a telemetry channel paging sequence.

8. A method according to claim 6, wherein the audio alert codes form part of the message alert itself

9. A method according to claim 6, wherein the audio alert codes form part of a caller line identity stored within the network.
